# EUROPEAN PATENT APPLICATION

(11) **EP 4 787 668 A1**
(43) Date of publication of application: **05.08.2026**
(21) Application number: 24872543.4
(22) Date of filing: 27.09.2024
(51) Int. Cl.: H02J 50/90, B60L 5/00, B60L 53/12, B60L 53/36, B60M 7/00, H02J 7/00, H02J 50/60, H02J 50/80

(54) **NON-CONTACT POWER SUPPLY METHOD, NON-CONTACT POWER SUPPLY SYSTEM, NON-CONTACT POWER SUPPLY DEVICE, NON-CONTACT POWER RECEPTION DEVICE, POSITION IDENTIFICATION METHOD FOR MOBILE BODY, POSITION IDENTIFICATION SYSTEM FOR MOBILE BODY, AND MOBILE BODY**

(30) Priority: 29.09.2023 JP 2023169750
(71) Applicant: Kabushiki Kaisha Tokai Rika Denki Seisakusho, Niwa-gun, Aichi 480-0195 (JP)
(72) Inventor: KOGA, Kenichi, Niwa-gun, Aichi 480-0195 (JP)
(74) Representative: TBK
(86) International application number: PCT/JP2024/034754
(87) International publication number: WO 2025/070762

(57) **Abstract**

A power feeding device (2) adapted to be installed in a location external to a mobility includes: a power supply coil (22); and at least one feeding-side transceiver (24) configured to perform communication conforming to a UWB wireless communication standard. A power receiving device (3) adapted to be installed in the mobility includes: a power receiving coil (32); and at least one receiving-side transceiver (34) configured to perform the communication conforming to the UWB wireless communication standard with the at least one feeding-side transceiver (24). A control device (6) specifies a relative position of the power supply coil the power receiving coil based on the communication, and executes processing related to wireless power transfer from the power supply coil (22) to the power receiving coil (32) using an electromagnetic field, based on the relative position.

## Description

### Field

The presently disclosed subject matter relates to a method and a system for performing wireless power transfer using an electromagnetic field between a power receiving device installed in a mobility and a power feeding device installed in a location external to the mobility. The presently disclosed subject matter also relates to a wireless power feeding device and a wireless power receiving device that are adapted to be included in the system.

The presently disclosed subject matter also relates to a mobility, as well as a method and a system for determining a position of the mobility relative to a reference position.

### Background

Japanese Patent Publication No. 2023-000400 A discloses a system for performing wireless power transfer by forming a magnetic field resonance coupling between a power feeding device installed on the ground and a power receiving device installed in a vehicle as an exemplary mobility. The wireless power transfer is performed, for example, for charging a battery of the vehicle.

### Summary of the Invention

### Technical Problem

There is a need for improving the convenience of a system for performing wireless power transfer using an electromagnetic field between a power receiving device installed in a mobility and a power feeding device installed in a location external to the mobility (first need).

There is a need for improving the convenience of a system for determining a position of the mobility relative to a reference position (second need).

### Solution to Problem

A first illustrative aspect of the presently disclosed subject matter for addressing the first need may provide a wireless power transfer method for performing wireless power transfer using an electromagnetic field between a power receiving device adapted to be installed in a mobility and a power feeding device adapted to be installed in a location external to the mobility, comprising:
causing at least one first transceiver included in the power feeding device and at least one second transceiver included in the power receiving device to perform communication conforming to a UWB wireless communication standard;
specifying a relative position of a power supply coil included in the power feeding device and a power receiving coil included in the power receiving device based on the communication; and
executing processing related to the wireless power transfer based on the relative position.

A second illustrative aspect of the presently disclosed subject matter for addressing the first need may provide a wireless power transfer system, comprising:
a control device;
a power receiving device adapted to be installed in a mobility; and
a power feeding device adapted to be installed in a location external to the mobility,
wherein the power feeding device includes:
   a power supply coil; and
   at least one first transceiver configured to perform communication conforming to a UWB wireless communication standard;
wherein the power receiving device includes:
   a power receiving coil; and
   at least one second transceiver configured to perform the communication conforming to the UWB wireless communication standard with the at least one first transceiver;
wherein the control device is configured to:
   specify a relative position of the power supply coil the power receiving coil based on the communication; and
   execute processing related to the wireless power transfer based on the relative position.

In order to suppress a decrease in efficiency of the power transfer performed by the wireless power transfer, it is necessary to accurately determine positions of the power feeding device and the power receiving device. According to the configuration of each of the first and second illustrative aspects, since it is determined whether the power feeding device and the power receiving device are in an appropriate relative position using UWB wireless communication capable of identifying the relative position between the transceivers with high accuracy, it is possible to perform the positioning of the power receiving coil installed in the mobility with respect to the power supply coil with high accuracy. As a result, it is possible to suppress a decrease in efficiency of the power transfer performed by the wireless power transfer.

In addition, since it is determined whether the power supply coil and the power receiving coil are in an appropriate relative position without depending on a technique such as low power emission (LPE) that involves power supply to the power supply coil, it is possible to suppress power consumption in the wireless power transfer system.

Furthermore, since a peak value of the transmission power of the UWB wireless communication is specified to be lower than a noise level of a digital device emitting radio waves, low power consumption and low coherence with other communications can be advantageously expected. Accordingly, it is possible to improve the convenience of the system for performing wireless power transfer using an electromagnetic field between the power receiving device installed in the mobility and the power feeding device installed in the location external to the mobility.

A third illustrative aspect of the presently disclosed subject matter for addressing the first need may provide a power feeding device adapted to be installed in a location external to a mobility, comprising:
a power supply coil adapted to perform wireless power transfer using an electromagnetic field with respect to a power receiving coil installed in the mobility;
at least one transceiver adapted to perform communication conforming to a UWB wireless communication standard with at least one transceiver installed in the mobility; and
a support supporting the power supply coil and the at least one transceiver such that a relative position thereof is made constant.

According to the configuration of the third illustrative aspect, since the position of the transceiver relative to the reference position of the power supply coil is fixed, it is possible to easily normalize information that is necessary for specifying the relative position between the power supply coil and the power receiving coil based on the communication conforming to the UWB wireless communication standard. Accordingly, it is possible to improve workability for installing the power feeding device while suppressing a decrease in the positioning accuracy of the power receiving coil installed in the mobility relative to the power supply coil. As a result, it is possible to improve the convenience of the system for performing wireless power transfer using an electromagnetic field between the power receiving device installed in the mobility and the power feeding device installed in the location external to the mobility.

A fourth illustrative aspect of the presently disclosed subject matter for addressing the first need may provide a power receiving device adapted to be installed in a mobility, comprising:
a power receiving coil adapted to receive wireless power transfer using an electromagnetic field from a power supply coil installed in a location external to the mobility;
at least one transceiver adapted to perform communication conforming to a UWB wireless communication standard with at least one transceiver installed in a location external to the mobility; and
a support supporting the power receiving coil and the at least one transceiver such that a relative position thereof is made constant.

According to the configuration of the fourth illustrative aspect, since the position of the receiving-side transceiver relative to the reference position of the power receiving coil is fixed, it is possible to easily normalize information that is necessary for specifying the relative position between the power supply coil and the power receiving coil based on the communication conforming to the UWB wireless communication standard. Accordingly, it is possible to improve workability for assembling the power receiving device to the mobility while suppressing a decrease in the positioning accuracy of the power receiving coil installed in the mobility relative to the power supply coil.

A fifth illustrative aspect of the presently disclosed subject matter for addressing the second need may provide a method for specifying a position of a mobility, comprising:
performing communication conforming to a UWB wireless communication standard between a first transceiver installed in the mobility and a second transceiver installed in a location external to the mobility;
specifying a relative position of the first transceiver and the second transceiver; and
specifying the position of the mobility relative to a reference position based on the relative position.

A sixth illustrative aspect of the presently disclosed subject matter for addressing the second need may provide a system for specifying a position of a mobility, comprising:
a first transceiver adapted to be installed in the mobility;
a second transceiver adapted to be installed in a location external to the mobility; and
a control device configured to:
   specify a relative position of the first transceiver and the second transceiver based on communication conforming to a UWB wireless communication standard performed between the first transceiver and the second transceiver; and
   specify the position of the mobility relative to a reference position based on the relative position.

A seventh illustrative aspect of the presently disclosed subject matter for addressing the second need may provide a mobility, comprising:
a first transceiver adapted to perform communication conforming to a UWB wireless communication standard with a second transceiver installed in a location external to the mobility; and
a control device configured to:
   specify a relative position of the first transceiver and the second transceiver based on the communication; and
   specify the position of the mobility relative to a reference position based on the relative position.

According to the configuration of each of the fifth to seventh illustrative aspects, since the relative position between the first transceiver and the second transceiver can be specified with high accuracy using the UWB wireless communication, it is possible to carry out the positioning of the mobility relative to the reference position with high accuracy. In addition, since a peak value of the transmission power of the UWB wireless communication is specified to be lower than a noise level of a digital device emitting radio waves, low power consumption and low coherence with other communications can be advantageously expected. Accordingly, it is possible to improve the convenience of the system for specifying the position of the mobility relative to the reference position.

### Brief Description of Drawings

FIG. 1 illustrates a configuration of a wireless power transfer system according to an exemplary embodiment.
FIG. 2 illustrates functional configurations of a power feeding device and a power receiving device of FIG. 1.
FIG. 3 illustrates a functional configuration of the wireless power transfer system of FIG. 1.
FIG. 4 illustrates an exemplary processing flow adapted to be executed in the wireless power transfer system of FIG. 1.
FIG. 5 illustrates an exemplary arrangement of a feeding-side transceiver and a receiving-side transceiver of FIG. 2.
FIG. 6 illustrates another exemplary arrangement of the feeding-side transceiver and the receiving-side transceiver of FIG. 2.
FIG. 7 illustrates another exemplary arrangement of the feeding-side transceiver and the receiving-side transceiver of FIG. 2.
FIG. 8 illustrates another exemplary arrangement of the feeding-side transceiver and the receiving-side transceiver of FIG. 2.
FIG. 9 illustrates another exemplary processing flow adapted to be executed in the wireless power transfer system of FIG. 1.
FIG. 10 illustrates another exemplary processing flow adapted to be executed in the wireless power transfer system of FIG. 1.
FIG. 11 illustrates another exemplary processing flow adapted to be executed in the wireless power transfer system of FIG. 1.

### Description of Embodiments

Exemplary embodiments will be described in detail below with reference to the accompanying drawings. In the drawings used in the following descriptions, the scale thereof is changed as required in order to make each element to a recognizable size.

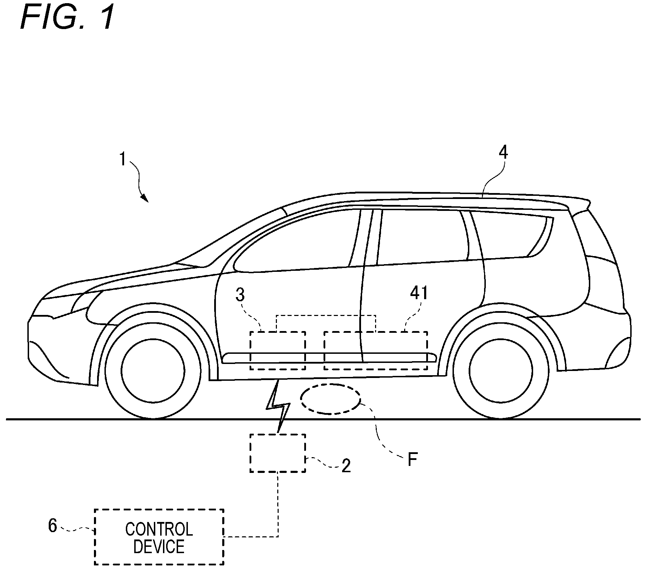

FIG. 1 illustrates a configuration of a wireless power transfer system 1 according to an exemplary embodiment. The wireless power transfer system 1 includes a wireless power feeding device 2 and a wireless power receiving device 3 (hereinafter, simply referred to as a "power feeding device 2" and a "power receiving device 3"). The power feeding device 2 is adapted to perform wireless power transfer using an electromagnetic field to the power receiving device 3. Examples of such wireless power transfer include a type of utilizing the magnetic field resonance coupling, a type of utilizing the electric field resonance coupling, a type of utilizing the electromagnetic induction, and the like.

In this example, the power receiving device 3 is installed in a vehicle 4. The vehicle 4 is an exemplary mobility. The power feeding device 2 is buried underground in a parking lot or the like. The underground in the parking lot or the like is an exemplary location external to the mobility. The power transferred from the power feeding device 2 to the power receiving device 3 is used, for example, to charge a battery 41 installed in the vehicle 4.

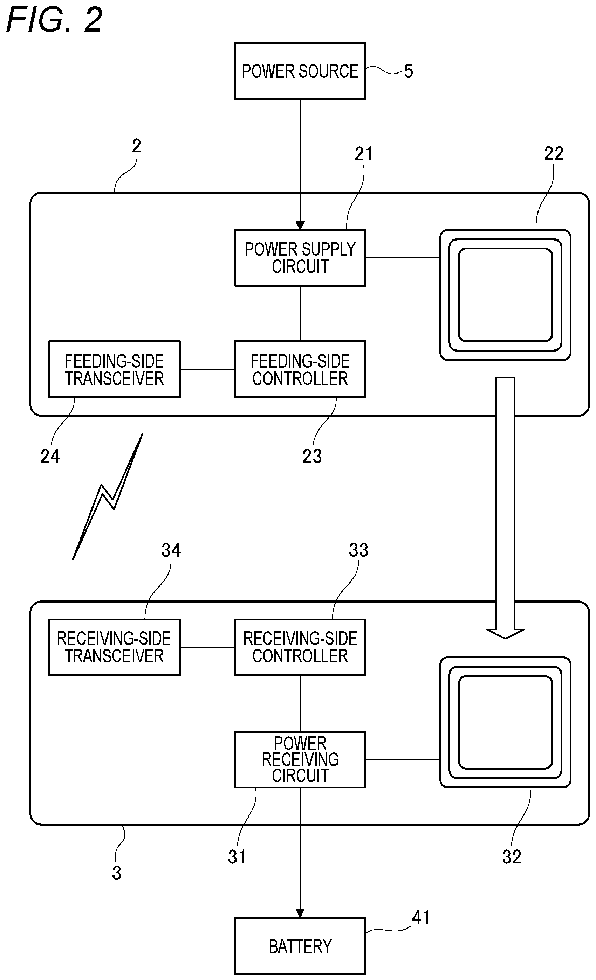

Referring to FIG. 2, specific configurations of the power feeding device 2 and the power receiving device 3 will be described.

The power feeding device 2 includes a power supply circuit 21, a power supply coil 22, and a feeding-side controller 23. The power supply circuit 21 is configured to feed power supplied from a power source 5 to a feeding-side resonance circuit including the power supply coil 22 and a power supply capacitor (not illustrated).

The power source 5 is, for example, a commercial AC power source for supplying single-phase AC power. The power source 5 may be another AC power source for supplying three-phase AC power, or may be a DC power source such as a fuel cell. The power source 5 may be buried under the ground together with the power feeding device 2, or may be disposed at an appropriate position on the ground.

In a case where AC power is supplied from the power source 5, the power supply circuit 21 includes a rectifier circuit and an inverter for converting the AC power into DC power. The DC power converted by the rectifier circuit is converted by the inverter into AC power according to the characteristics of the feeding-side resonance circuit. The feeding-side controller 23 is configured to control the operation of the inverter.

The specifications of the power supply coil 22 and the feeding capacitor in the feeding-side resonance circuit is determined such that the resonance frequency of the feeding-side resonance circuit has a predefined value. In a case where the high-frequency power supplied from the inverter is applied to the feeding-side resonance circuit, the power supply coil 22 generates an AC magnetic field for power feeding.

The power receiving device 3 includes a power receiving circuit 31, a power receiving coil 32, and a receiving-side controller 33. The power receiving circuit 31 is configured to supply power received by a receiving-side resonance circuit including a power receiving coil 32 and a power receiving capacitor (not illustrated) to the battery 41.

The receiving-side resonance circuit has a similar configuration similar to the feeding-side resonance circuit. The specifications of the power receiving coil 32 and the power receiving capacitor in the receiving-side power supply circuit are determined so as to match the resonance frequency of the feeding-side resonance circuit, or so that the difference in the resonance frequency falls within a prescribed range (e.g., within ±20%).

Vibration of the AC magnetic field generated by the power supply coil 22 is transmitted to the receiving-side resonance circuit that is configured to resonate at the resonance frequency of the feeding-side resonance circuit. As a result, induced current flows through the receiving-side resonance circuit, so that an induced electromotive force is generated. The power receiving circuit 31 includes a rectifier circuit for converting the AC power supplied from the receiving-side resonance circuit into DC power. The power receiving circuit 31 also includes a conversion circuit for adapting the voltage level of the converted DC power with the specification of the battery 41. The receiving-side controller 33 is configured to control power to be supplied to the battery 41.

The power feeding device 2 includes a feeding-side transceiver 24. The power receiving device 3 includes a receiving-side transceiver 34. The feeding-side transceiver 24 and the receiving-side transceiver 34 are configured to enable bi-directional communication according to a UWB (Ultra-Wide Band) wireless communication standard. Examples of the UWB wireless communication standard include channel number 9 in IEEE 802.15.4a (center frequency: 7987.2 MHz; frequency bandwidth: 499.2 MHz). The feeding-side transceiver 24 is an exemplary first transceiver. The receiving-side transceiver 34 is an exemplary second transceiver.

The feeding-side controller 23 of the power feeding device 2 is configured to control an operation of the feeding-side transceiver 24 in addition to the above-described operation. The receiving-side controller 33 of the power receiving device 3 is configured to control an operation of the receiving-side transceiver 34 in addition to the above-described operation.

In order to suppress a decrease in efficiency of the power transfer performed by the wireless power transfer, it is necessary to accurately determine a position of the power receiving coil 32 with respect to the power supply coil 22. In other words, it is necessary to accurately stop the vehicle 4 equipped with the power receiving device 3 with respect to the power feeding device 2 buried underground in the parking lot or the like.

As illustrated in FIG. 1, the wireless power transfer system 1 includes a control device 6. The control device 6 is configured to specify a relative position between the power supply coil 22 and the power receiving coil 32 based on the UWB wireless communication performed between the feeding-side transceiver 24 and the receiving-side transceiver 34.

The control device 6 may be disposed in the parking lot together with the power feeding device 2, or may be disposed in a remote place capable of communicating with the power feeding device 2.

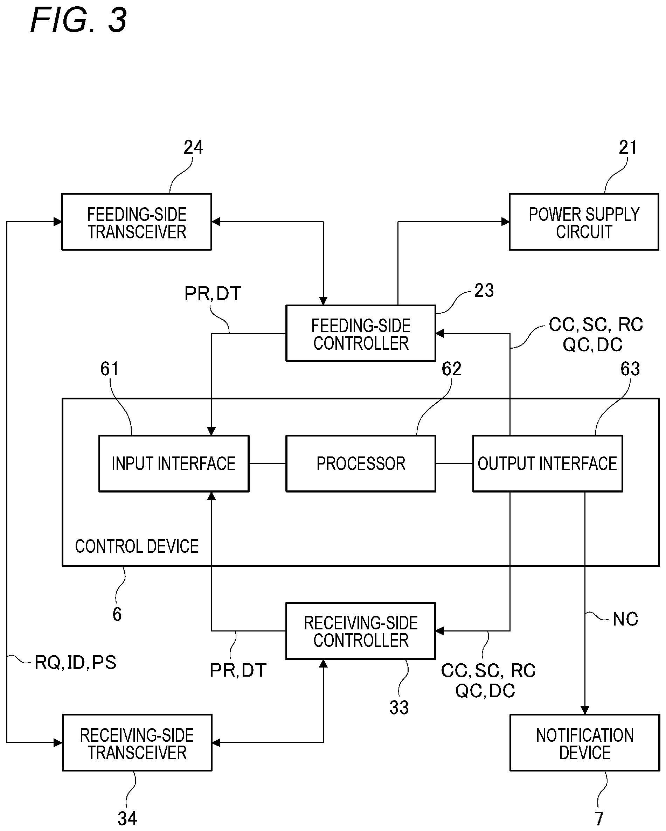

FIG. 3 illustrates a functional configuration of the control device 6. The control device 6 includes an input interface 61, a processor 62, and an output interface 63. The processor 62 outputs, from an output interface 63 configured as a hardware interface, a communication control signal CC for causing the feeding-side controller 23 to perform the operation control of the feeding-side transceiver 24.

The communication control signal CC may be an analog signal or a digital signal in accordance with the specification of the power feeding device 2. In a case where the communication control signal CC is an analog signal, the output interface 63 is provided with an appropriate conversion circuit including a D/A converter. This description is similarly applied to other signals described later that may be outputted from the output interface 63.

The feeding-side transceiver 24 transmits a trigger signal to the receiving-side transceiver 34 based on the control of the feeding-side controller 23. As a result, signals conforming to the UWB wireless communication standard are exchanged between the feeding-side transceiver 24 and the receiving-side transceiver 34, so that the relative position between the feeding-side transceiver 24 and the receiving-side transceiver 34 is specified. As used herein, the expression "a relative position between A and B" means including "a distance between A and B". Since the ranging/positioning technique itself using UWB wireless communication is well known, a detailed description thereof will be omitted.

The transmission of the trigger signal may be actively performed at a predefined time interval from the power feeding device 2, or may be performed when approach of the vehicle 4 to the power feeding device 2 is detected through an appropriate sensor. Alternatively, the UWB wireless communication may be initiated in response to reception of a trigger signal transmitted from the receiving-side transceiver 34 by the feeding-side transceiver 24.

The feeding-side controller 23 is configured to output relative position data PR including information corresponding to the specified relative position between the feeding-side transceiver 24 and the receiving-side transceiver 34. The feeding-side transceiver 24 may directly output the relative position data PR. The relative position data PR may be in the form of analog data or may be in the form of digital data, in accordance with the specification of the power feeding device 2.

The relative position data PR is inputted to an input interface 61 configured as a hardware interface. The data transmission from the feeding-side controller 23 to the input interface 61 may be performed via wired communication or wireless communication. In a case where the relative position data PR is in the form of analog data, the input interface 61 is provided with an appropriate conversion circuit including an A/D converter. This description is similarly applied to other signals described later that may be inputted the input interface 61.

Alternatively, the UWB wireless communication may be initiated in response to reception of a trigger signal transmitted from the receiving-side transceiver 34 by the feeding-side transceiver 24. In this case, the relative position data PR can be acquired by the receiving-side controller 33. The acquired relative position data PR is transmitted from the receiving-side controller 33 or the receiving-side transceiver 34 to the input interface 61 via wireless communication.

In a case where the relative position between the feeding-side transceiver 24 and the power supply coil 22 and the relative position between the receiving-side transceiver 34 and the power receiving coil 32 are known, a relative position between the power supply coil 22 and the power receiving coil 32 can also be specified based on the relative position between the feeding-side transceiver 24 and the receiving-side transceiver 34 indicated by the relative position data PR. Based on the relative position data PR, the processor 62 determines whether the relative position between the power supply coil 22 and the power receiving coil 32 satisfies a predefined condition.

For example, it is determined whether a distance between a reference position of the power supply coil 22 and a reference position of the power receiving coil 32 is less than a predefined value. The reference position can be appropriately determined as long as a common rule is applied between the power supply coil 22 and the power receiving coil 32. For example, a center position of the coil may be the reference position.

In a case where it is determined that the relative position between the power supply coil 22 and the power receiving coil 32 satisfies the predefined condition, the processor 62 outputs, from the output interface 63, a power supply control signal SC for causing the feeding-side controller 23 to perform the operation control of the power supply circuit 21 . The feeding-side controller 23 causes the power supply circuit 21 to start supplying power based on the power supply control signal SC. The processing for causing the power feeding device 2 to start the wireless power transfer to the power receiving device 3 (power transfer processing) is an exemplary processing related to the wireless power transfer.

In a case where it is determined that the relative position between the power supply coil 22 and the power receiving coil 32 does not satisfy the predefined condition, the processor 62 outputs, from the output interface 63, a notification control signal NC for causing a notification device 7 to perform notification processing. Based on the notification control signal NC, the notification device 7 notifies a user of the vehicle 4 of the fact that the condition for initiating the power transfer is not satisfied. The notification may be performed with at least one of a visual notification, an audio notification, and a tactile notification. The processing for causing the notification device 7 to perform notification (notification processing) is an exemplary processing related to wireless power transfer.

As an example, the notification device 7 may be a stationary device installed in the parking lot. As another example, the notification device 7 may be a device disposed in a vehicle cabin of the vehicle 4. As another example, the notification device 7 may be a mobile device adapted to be carried by the user of the vehicle 4. The notification control signal NC may be a signal used for wired communication or a signal used for wireless communication, in accordance with the specification of the notification device 7.

In addition to or in place of the above-described notification processing, the processor 62 outputs, from the output interface 63, a restriction control signal RC for causing the feeding-side controller 23 to restrict the power supply (restriction processing), in a case where it is determined that the relative position between the power supply coil 22 and the power receiving coil 32 does not satisfy the predefined condition. The restriction processing is an exemplary processing related to the wireless power transfer.

Examples of the restriction processing performed by the feeding-side controller 23 based on the restriction control signal RC include processing for preventing the wireless power transfer, processing for decreasing power to be transferred from a normal state, and the like.

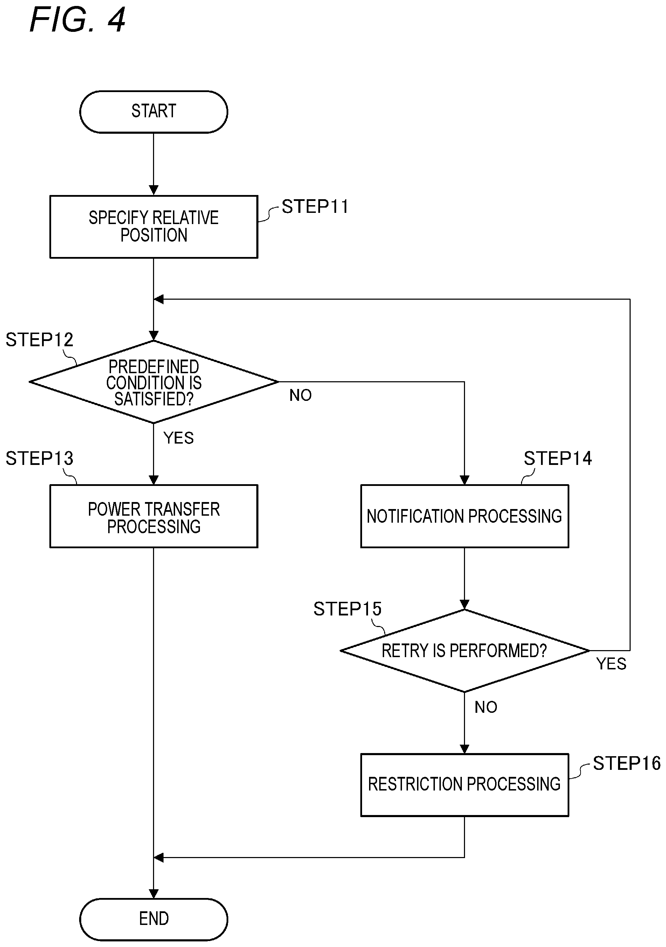

FIG. 4 illustrates an exemplary flow of a wireless power transfer method adapted to be executed by the wireless power transfer system 1 configured as described above.

First, the UWB wireless communication is performed between the feeding-side transceiver 24 and the receiving-side transceiver 34, so that the specification of the relative position between the power supply coil 22 and the power receiving coil 32 is initiated (STEP11). The determination of the relative position is continued at least until the power transfer is initiated.

Subsequently, it is determined whether the specified relative position between the power supply coil 22 and the power receiving coil 32 satisfies a predefined condition (STEP12).

In a case where it is determined that the specified relative position between the power supply coil 22 and the power receiving coil 32 satisfies the predefined condition (YES in STEP12), wireless power transfer from the power feeding device 2 to the power receiving device 3 is initiated (STEP13). It should be noted that the power transfer may be automatically initiated, or may be initiated in response to an instruction input from a user performed when the notification device 7 notifies the user of a fact that the power transfer is permitted.

For example, in a case where it is determined that the specified relative position between the power supply coil 22 and the power receiving coil 32 does not satisfy the predefined condition because of a fact that the vehicle 4 stops at an inappropriate position (NO in STEP12), the fact is notified to the user of the vehicle 4 through the notification device 7 (STEP14).

The user who receives the notification can retry the positioning of the vehicle 4. Subsequently, it is determined whether such a retry is performed (STEP15). Specifically, the control device 6 starts clocking in response to the output of the notification control signal NC. In a case where the positioning is retried, according to the move of the vehicle 4, the relative position between the power supply coil 22 and the power receiving coil 32 changes. In other words, the relative position data PR changes. The processor 62 determines whether the positioning is retied based on whether a change occurs in the relative position data PR until an elapsed time as clocked reaches a threshold value.

In a case where it is determined that the retry is performed (YES in STEP15), the processing returns to STEP12, so that it is determined whether a resultant parking position is appropriate.

In a case where no change occurs in the relative position data PR until the elapsed time as clocked reaches the threshold value, no retry for the positioning is performed (NO in STEP15), so that the processing for restricting the power transfer is executed (STEP16).

According to the configuration of this exemplary embodiment, since it is determined whether the power supply coil 22 and the power receiving coil 32 are in an appropriate relative position using UWB wireless communication capable of identifying the relative position between the transceivers with high accuracy, it is possible to perform the positioning of the power receiving coil 32 with respect to the power supply coil 22 at the time of stoppage of the vehicle 4 with high accuracy. As a result, it is possible to suppress a decrease in efficiency of the power transfer performed by the wireless power transfer. For example, in a case where the transferred power is used for charging the battery 41 installed in the vehicle 4 as in the present example, it is possible to suppress an increase in the charging time caused by a decrease in the power transfer efficiency. As a result, it is possible to suppress occurrence of a situation that an expected amount of charging is not performed after a predefined time period has elapsed.

In addition, since it is determined whether the power supply coil 22 and the power receiving coil 32 are in an appropriate relative position without depending on a technique such as low power emission (LPE) that involves power supply to the power supply coil 22, it is possible to suppress power consumption in the wireless power transfer system 1.

Furthermore, since a peak value of the transmission power of the UWB wireless communication is specified to be lower than a noise level of a digital device emitting radio waves, low power consumption and low coherence with other communications can be advantageously expected. Accordingly, it is possible to improve the convenience of the system for performing wireless power transfer using an electromagnetic field between the power receiving device 3 installed in the vehicle 4 and the power feeding device 2 installed in the location external to the vehicle 4.

It should be noted that, in a case where the parking lot in which the wireless power transfer system 1 is disposed includes multiple power feeding devices 2, the control device 6 may be associated with each of the power feeding devices 2 one by one, or a single control device 6 may be associated with multiple power feeding devices 2.

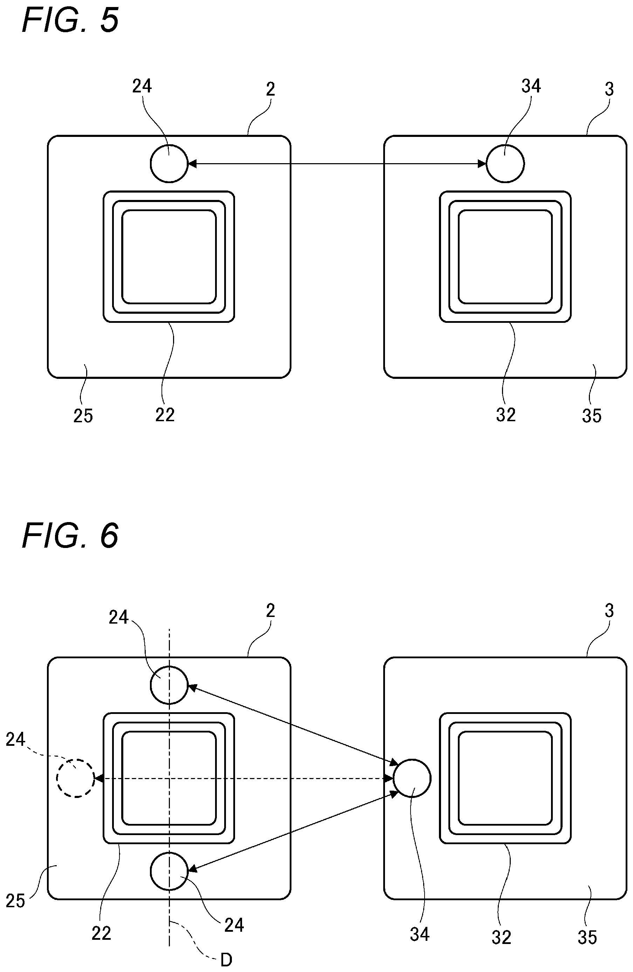

Each of the number of feeding-side transceiver 24 installed in the power feeding device 2 and the number of receiving-side transceiver 34 installed in the power receiving device 3 can be appropriately determined. As illustrated in FIG. 5, in a case where the UWB wireless communication is performed between a single feeding-side transceiver 24 and a single receiving-side transceiver 34, the relative position between the specified power supply coil 22 and the power receiving coil 32 is a distance between the two.

As illustrated in FIG. 6, in a case where the UWB wireless communication is performed between two feeding-side transceivers 24 and a single receiving-side transceiver 34, a position of the receiving-side transceiver 34 along an arrayed direction D of the two feeding-side transceivers 24 indicated by chain lines can be specified based on a phase difference of radio waves received by the respective feeding-side transceivers 24. In a case where the UWB wireless communication is performed between three feeding-side transceivers 24 and a single receiving-side transceiver 34 as illustrated by chain lines, a two-dimensional position of the receiving-side transceiver 34 can be specified.

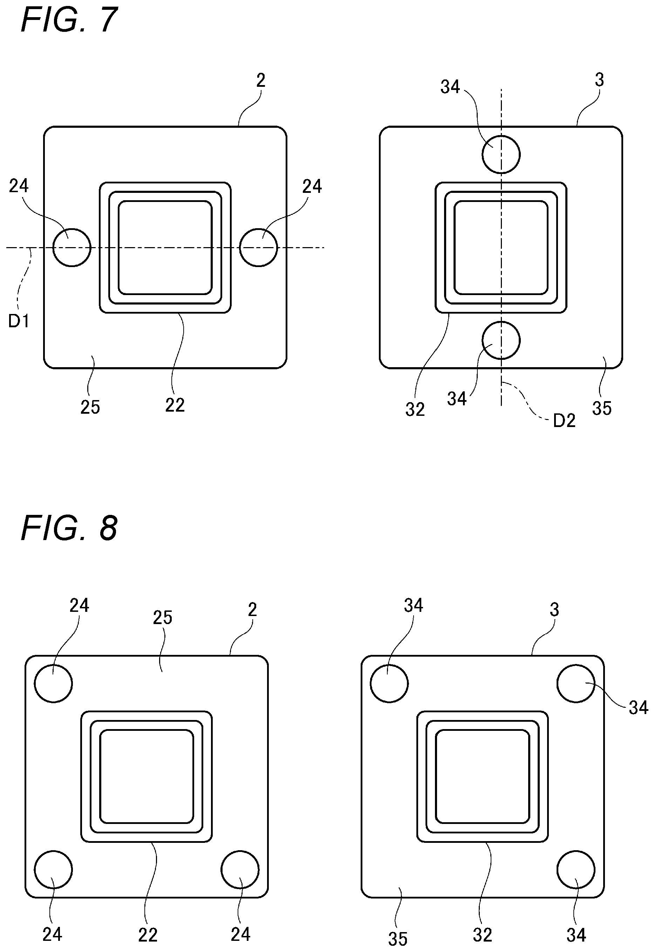

As illustrated in FIG. 7, in a case where the UWB wireless communication is performed between two feeding-side transceivers 24 and two receiving-side transceivers 34, as long as an arrayed direction D1 of the two feeding-side transceivers 24 and an arrayed direction D2 of the two receiving-side transceivers 34 are not parallel, a two-dimensional position of each feeding-side transceiver 24 and each receiving-side transceiver 34 can be specified.

By increasing the number of the receiving-side transceiver 34, a more accurate position of the feeding-side transceiver 24 viewed from the power receiving device 3 can be specified. Accordingly, as illustrated in FIG. 8, it is preferable that the power feeding device 2 includes at least three feeding-side transceivers 24, and the power receiving device 3 includes at least three receiving-side transceivers 34.

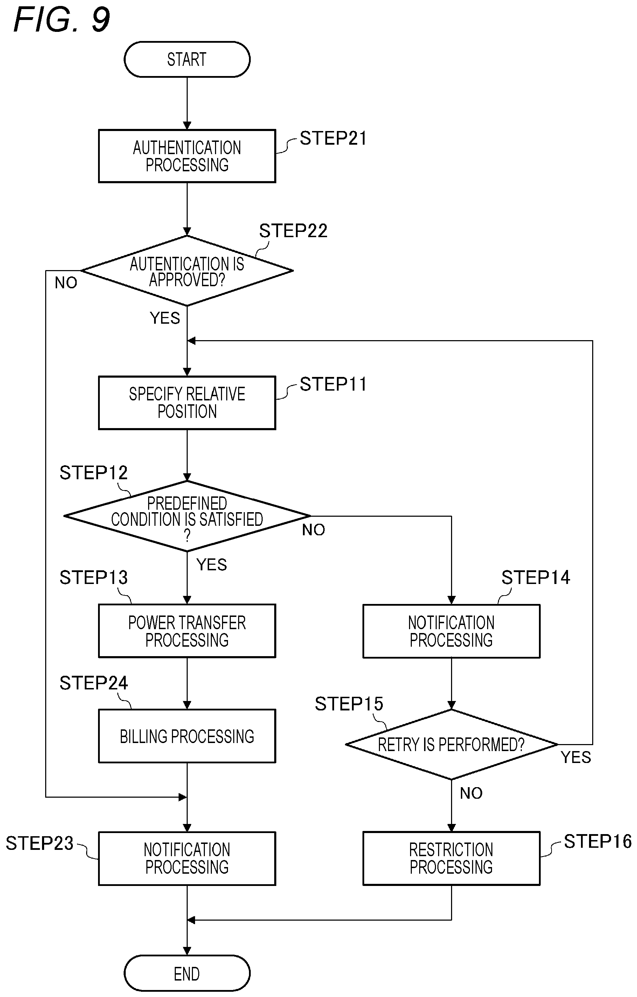

FIG. 9 illustrates another exemplary flow of the wireless power transfer method adapted to be executed by the wireless power transfer system 1. Processing elements substantially the same as those in the example illustrated in FIG. 4 are assigned with the same reference numerals, and repetitive descriptions for those will be omitted.

In this example, prior to specifying the relative position between the power supply coil 22 and the power receiving coil 32 (STEP11), authentication processing of the vehicle 4 is executed (STEP21). In this case, authentication information ID for authenticating the vehicle 4 or a user of the vehicle 4 is communicated between the feeding-side transceiver 24 of the power feeding device 2 and the receiving-side transceiver 34 of the power receiving device 3 (see FIG. 3).

As an example, the processor 62 of the control device 6 may output, from the output interface 63, a request control signal QC for causing the feeding-side controller 23 of the power feeding device 2 to request the authentication information. In response to reception of the request control signal QC, the feeding-side controller 23 causes the feeding-side transceiver 24 to transmit an authentication request signal RQ. The authentication request signal RQ is received by the receiving-side transceiver 34 of the power receiving device 3.

In response to reception of the authentication request signal RQ through the receiving-side transceiver 34, the receiving-side controller 33 causes the receiving-side transceiver 34 to transmit the authentication information ID stored in a storage (not illustrated). The storage may be provided in the power receiving device 3, or may be provided at an appropriate position in the vehicle 4 in which the power receiving device 3 is installed. The authentication information ID is received by the feeding-side transceiver 24.

The feeding-side controller 23 compares the authentication information ID received through the feeding-side transceiver 24 with the authentication information stored in advance in a storage (not illustrated). In a case where match is found in both information, the processor 62 determines that the authentication is approved. In a case where it is determined that the authentication is approved (YES in STEP22 in FIG. 9), the processor 62 starts specifying the relative position between the power supply coil 22 and the power receiving coil 32 described above (STEP11).

In a case where it is determined that the authentication is not approved (NO in STEP22), the processor 62 outputs, from the output interface 63, a notification control signal NC for causing the notification device 7 to execute processing for notifying the user of the vehicle 4 of the fact that the authentication is not approved (STEP23). Thereafter, the processing is terminated.

According to such a configuration, since the specifying processing of the relative position is initiated only with respect to the vehicle 4 in which the authentication information ID is registered in advance, it is possible to suppress unnecessary power consumption in the wireless power transfer system 1. In particular, in such a configuration wherein the control device 6 causes multiple power feeding devices 2 to transmit the authentication request signal RQ, when a specific power feeding device 2 receives a response from the power receiving device 3 installed in the vehicle 4 to be parked, it is possible to execute processing for causing another power feeding device 2 to stop transmitting the authentication request signal RQ. In this case as well, unnecessary power consumption in the wireless power transfer system 1 can be suppressed.

As another example, there may be employed a configuration wherein an authentication request signal RQ is transmitted from the receiving-side transceiver 34 of the power receiving device 3 installed in the vehicle 4. The authentication request signal RQ may include the authentication information ID. According to such a configuration, since the authentication processing is initiated only in the specific power feeding device 2 that receives the authentication request signal RQ, unnecessary power consumption in the wireless power transfer system 1 can be suppressed.

As illustrated in FIG. 9, in this example wherein the authentication processing is performed, billing processing may be performed with respect to the vehicle 4 for which the wireless power transfer is performed (STEP24). The billing processing is processing for billing a user associated with the authentication information ID for a fee corresponding to an amount of transferred power, for example. Collection of the fee may be made through cash or cashless settlement through a settlement machine installed in the parking lot, for example, or may be debited from an account associated with the authentication information ID.

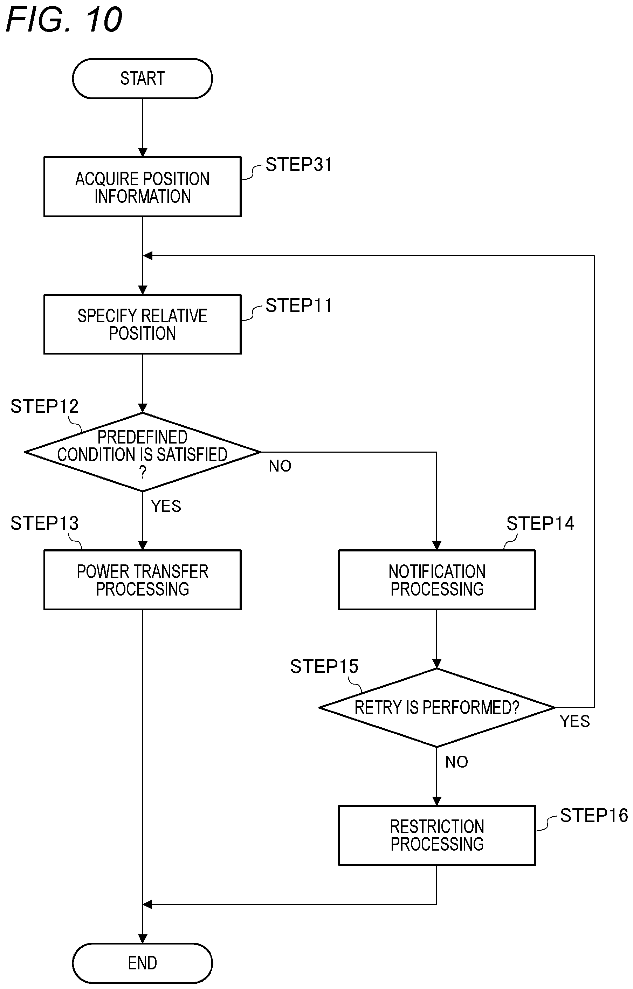

FIG. 10 illustrates another exemplary flow of the wireless power transfer method adapted to be executed by the wireless power transfer system 1. Processing elements substantially the same as those in the example illustrated in FIG. 4 are assigned with the same reference numerals, and repetitive descriptions for those will be omitted. The processing flow according to this example may be executed in addition to or in place of the processing flow described with reference to FIG. 9.

In this example, prior to the specifying processing of the relative position between the power supply coil 22 and the power receiving coil 32 (STEP11), the power feeding device 2 acquires, from the power receiving device 3, position information PS indicating a position of the receiving-side transceiver 34 relative to the reference position of the power receiving coil 32 (STEP31). The position information PS can be generated through measurement before the power receiving device 3 is shipped. Alternatively, the position information PS may be information indicating a normalized position of the receiving-side transceiver 34 with respect to the reference position of the power receiving coil 32. The position information PS is stored in a storage (not illustrated) included in the power receiving device 3.

Specifically, as illustrated in FIG. 3, in response to initiation of the UWB wireless communication between the feeding-side transceiver 24 and the receiving-side transceiver 34, the position information PS is transmitted from the receiving-side transceiver 34. The feeding-side controller 23 performs processing for specifying the relative position between the power supply coil 22 and the power receiving coil 32 with reference to the positional information PS to generate the relative position data PR (STEP11).

In a case where the receiving-side controller 33 is configured to generate the relative position data PR, the power receiving device 3 acquires the position information PS indicating the position of the feeding-side transceiver 24 with respect to the reference position of the power supply coil 22 from the power feeding device 2. The position information PS may be generated through measurement before the power feeding device 2 is shipped. Alternatively, the position information PS may be information indicating a normalized position of the feeding-side transceiver 24 with respect to the reference position of the power supply coil 22. The position information PS is stored in a storage (not illustrated) included in the power feeding device 2.

Specifically, in response to initiation of the UWB wireless communication between the feeding-side transceiver 24 and the receiving-side transceiver 34, the position information PS is transmitted from the feeding-side transceiver 24. The receiving-side controller 33 performs processing for specifying the relative position between the power supply coil 22 and the power receiving coil 32 with reference to the positional information PS to generate the relative position data PR (STEP11).

According to the configuration of this example utilizing the characteristics of the UWB wireless communication capable of performing not only ranging and positioning but also data communication, since it is referred to at least one of the position of the feeding-side transceiver 24 relative to the reference position of the power supply coil 22 and the position of the receiving-side transceiver 34 relative to the reference position of the power receiving coil 32 that would be different among the products, the relative position between the power supply coil 22 and the power receiving coil 32 can be more accurately specified.

At least one of the feeding-side transceiver 24 and the receiving-side transceiver 34 may be provided with a UWB radar function (ranging function). Specifically, in a case where a time length from when a pulse signal emitted from the feeding-side transceiver 24 to when the pulse signal reflected by a bottom of the vehicle 4 returns is shorter than an assumed value, it is detected presence of a foreign object F between the power feeding device 2 and the power receiving device 3 as illustrated in FIG. 1. The foreign object F may be or may not be an organism. Similarly, in a case where a time length from when a pulse signal emitted from the receiving-side transceiver 34 to when the pulse signal reflected by the ground returns is shorter than an assumed value, it is detected presence of a foreign object F. In a case where there is a moving foreign object F between the power feeding device 2 and the power receiving device 3, since the frequency of the pulse signal reflected by the foreign object F is shifted, it is possible to detect a distance to the foreign object F based on a time length until the frequency-shifted pulse signal returns.

In a case where the foreign object F is detected, the feeding-side controller 23 or the receiving-side controller 33 is configured to output a detection signal DT. The detection signal DT is inputted to the input interface 61 of the control device 6. The processor 62 may be configured to perform a processing for restricting the execution of the wireless power transfer in a case where the input interface 61 receives the detection signal DT.

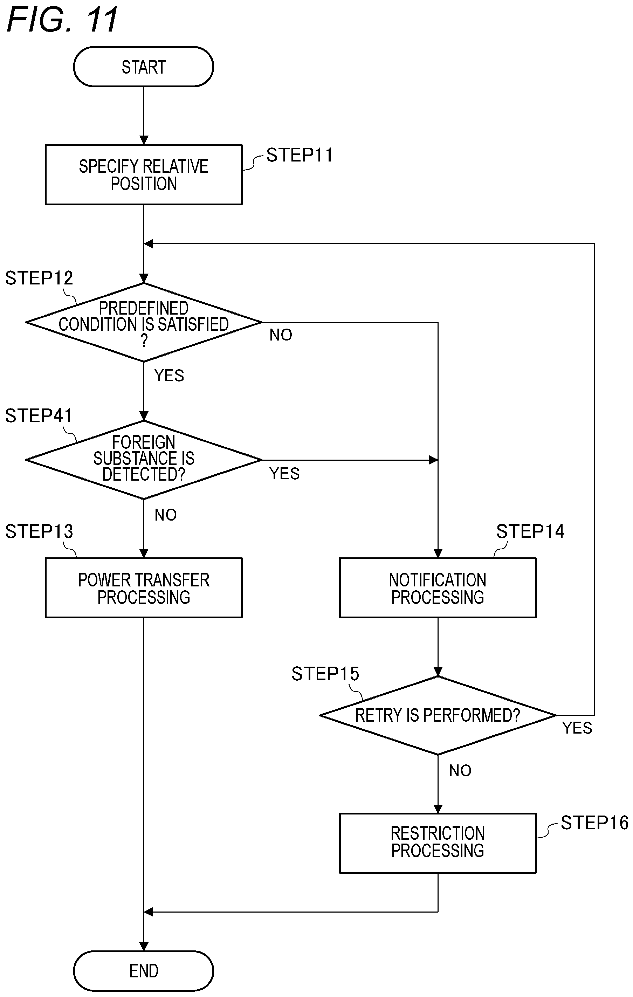

FIG. 11 illustrates another exemplary flow of the wireless power transfer method adapted to be executed by the wireless power transfer system 1 configured as described above. Processing elements substantially the same as those in the example illustrated in FIG. 4 are assigned with the same reference numerals, and repetitive descriptions for those will be omitted. The processing flow according to this example may be executed in addition to or in place of the processing flows described with reference to FIGS. 9 and 10.

In this example, in a case where it is determined that the relative position between the power supply coil22 and the power receiving coil 32 satisfies the predefined condition (YES in STEP12), the processor 62 outputs, from the output interface 63, a detection control signal DC for causing the power feeding device 2 or the power receiving device 3 to perform the foreign object detection (see FIG. 3). In a case where it is determined that no foreign object is detected as a result of the foreign object detection performed as described above (NO in STEP41), the power transfer processing is executed (STEP13).

In a case where it is determined that a foreign object is detected (YES in STEP41), the fact is notified to the user of the vehicle 4 through the notification device 7 (STEP14). The user who receives the notification can reset the power transfer environment through the removal of the foreign object. Subsequently, it is determined whether the foreign object is removed (STEP15). Specifically, it is determined whether the output of the detection signal DT from the feeding-side controller 23 or the receiving-side controller 33 is canceled within a predefined time period.

In a case where it is determined that the foreign object is removed, the processing returns to STEP12. Since the predefined condition is satisfied (YES in STEP12) and no foreign object is present (NO in STEP41), the power transfer processing is executed. In a case where it is determined that no foreign object is removed within the predefined time period, processing for restricting the power transfer is executed (STEP16).

According to such a configuration, it is possible to suppress occurrence of a situation that a decrease in efficiency of the power transfer performed by the wireless power transfer is caused by the presence of the foreign object between the power feeding device 2 and the power receiving device 3. In addition, in a case where the foreign object is an organism, it is possible to suppress occurrence of a situation that the organism is exposed to the electromagnetic field used for the wireless power transfer.

It is known a technique for locking/unlocking a door of the vehicle 4 with authentication of a user of the vehicle 4 through the UWB wireless communication performed between a mobile device carried by the user and a transceiver installed in the vehicle 4. Specifically, authentication information for authenticating the user or the mobile device is transmitted from the mobile device to the transceiver with the UWB wireless communication. An authentication device (not illustrated) installed in the vehicle 4 compares the authentication information received by the transceiver with authentication information stored in advance in a storage device (not illustrated). In a case where match is found in both information, the authentication device determines that the authentication processing is approved. The receiving-side transceiver 34 included in the power receiving device 3 installed in the vehicle 4 can be shared for performing the authentication processing in addition to the wireless power transfer described above. It should be noted that the above-described authentication information transmitted from the mobile device may be used as the authentication information ID for the wireless power transfer described above.

According to such a configuration, it is possible to configure the wireless power transfer system 1 with efficient utilization of resources installed in the vehicle 4 for the UWB wireless communication.

As illustrated in FIGS. 5 to 8, the power feeding device 2 may include a support 25. The support 25 supports the power supply coil 22 and at least one feeding-side transceiver 24 such that a relative position thereof is made constant. Similarly, the power receiving device 3 may be provided with a support 35. The support 35 supports the power receiving coil 32 and at least one receiving-side transceiver 34 such that a relative position thereof is made constant.

According to such a configuration, since the position of the feeding-side transceiver 24 relative to the reference position of the power supply coil 22 is fixed, it is possible to easily normalize information that is necessary for specifying the relative position between the power supply coil 22 and the power receiving coil 32. Accordingly, it is possible to improve workability for installing the power feeding device 2 while suppressing a decrease in the positioning accuracy of the power receiving coil 32 relative to the power supply coil 22 when the vehicle 4 is stopped.

Similarly, since the position of the receiving-side transceiver 34 relative to the reference position of the power receiving coil 32 is fixed, it is possible to easily normalize information that is necessary for specifying the relative position between the power supply coil 22 and the power receiving coil 32. Accordingly, it is possible to improve workability for assembling the power receiving device 3 to the vehicle 4 while suppressing a decrease in the positioning accuracy of the power receiving coil 32 relative to the power supply coil 22 when the vehicle 4 is stopped.

Each of the feeding-side controller 23 of the power feeding device 2, the receiving-side controller 33 of the power receiving device 3, and the processor 62 of the control device 6 having various functions described above can be implemented by an exclusive integrated circuit such as a microcontroller, an ASIC, and an FPGA provided with a storage element in which a computer program for realizing the function is pre-installed.

Alternatively, each of the feeding-side controller 23, the receiving-side controller 33, and the processor 62 can be implemented by a versatile microprocessor operating in cooperation with a versatile memory. Examples of the versatile microprocessor include a CPU, an MPU, and a GPU. Examples of the versatile memory include a ROM and a RAM. In this case, a computer program for realizing the functions may be stored in the ROM. The versatile microprocessor specifies at least a part of the program stored in the ROM, loads the program on the RAM, and executes the processing described above in cooperation with the RAM.

Each of the feeding-side controller 23, the receiving-side controller 33, and the processor 62 may be implemented by a combination of the versatile microprocessor and the exclusive integrated circuit.

The functions of the processor 62 need not be implemented by a single device. For example, a part of the function of the processor 62 may be shared between a device installed in a parking lot together with the power feeding device 2 and a device installed in a location remote from the parking lot.

The foregoing description of various configurations is provided merely by way of illustration to facilitate understanding of the presently disclosed subject matter. Each of the exemplary configurations may be modified or combined with the others without departing from the scope of the presently disclosed subject matter.

The "UWB wireless communication standard" used in the above exemplary embodiment is originated from a standard conforming to IEEE 802.15. However, the expression is not intended to be limited to that standard. An appropriate derivative or alternative standard can be adopted as long as the standard is for short-range wireless communication by which the relative position between the transceivers can be advantageously specified with high accuracy while low power consumption and low coherency with other communications can be advantageously expected.

In the above exemplary embodiment, the power feeding device 2 is buried in the ground adapted to face the bottom of the vehicle 4. However, the location of the power feeding device 2 can be appropriately changed according to an assumed relative position with respect to the power receiving device 3. For example, the power feeding device 2 may be buried in a wall adapted to laterally face the vehicle 4. Alternatively, the power feeding device 2 may be installed in a carrier capable of assuming an appropriate relative position with respect to the vehicle 4.

In the above exemplary embodiment, the vehicle 4 in which the power receiving device 3 is installed includes four wheels. However, the number of wheels may be any number of two or more.

The power receiving device 3 may be installed in a mobility other than the vehicle 4. Examples of another mobility include a railway, an aircraft, a flying object, a ship, and the like. Such mobilities may not require a driver.

The above exemplary embodiment can be regarded as a system for accurately positioning the vehicle 4 with respect to the power feeding device 2 based on the UWB wireless communication performed between the feeding-side transceiver 24 and the receiving-side transceiver 34. In particular, by using the ranging function of the UWB wireless communication, it is possible to accurately specify the relative position between the receiving-side transceiver 34 installed in the vehicle 4 and the feeding-side transceiver 24 disposed in the location external to the vehicle 4.

More generally, communication conforming to the UWB wireless communication standard is performed between a first transceiver installed in a mobility and a second transceiver installed in a location external to the mobility. Based on the communication, a relative position between the first transceiver and the second transceiver is specified, so that a position of the mobility relative to a reference position is specified based on the relative position. The relative position and the determination of the position of the mobility are specified by a control device. A position where the control device is installed is not particularly limited. However, the control device is preferably installed in a mobility.

According to such a configuration, since the relative position between the first transceiver and the second transceiver can be specified with high accuracy using the UWB wireless communication, it is possible to carry out the positioning of the mobility relative to the reference position with high accuracy. In addition, since a peak value of the transmission power of the UWB wireless communication is specified to be lower than a noise level of a digital device emitting radio waves, low power consumption and low coherence with other communications can be advantageously expected. Accordingly, it is possible to improve the convenience of the system for specifying the position of the mobility relative to the reference position.

The present application is based on Japanese Patent Application No. 2023-169750 filed on September 29, 2023, the entire contents of which are incorporated herein by reference.

## Claims

1. A wireless power transfer method for performing wireless power transfer using an electromagnetic field between a power receiving device adapted to be installed in a mobility and a power feeding device adapted to be installed in a location external to the mobility, comprising:
causing at least one first transceiver included in the power feeding device and at least one second transceiver included in the power receiving device to perform communication conforming to a UWB wireless communication standard;
specifying a relative position of a power supply coil included in the power feeding device and a power receiving coil included in the power receiving device based on the communication; and
executing processing related to the wireless power transfer based on the relative position.

2. The wireless power transfer method according to claim 1,
wherein the number of at least one of the first transceiver and the second transceiver is multiple.

3. The wireless power transfer method according to claim 2,
wherein the number of at least one of the first transceiver and the second transceiver is at least three.

4. The wireless power transfer method according to any one of claims 1 to 3, further comprising:
executing authentication of the mobility with the communication prior to the specifying of the relative position.

5. The wireless power transfer method according to claim 4, further comprising:
executing billing processing for the wireless power transfer in a case where the authentication is approved.

6. The wireless power transfer method according to any one of claims 1 to 5,
wherein the power feeding device acquires information indicating a position of the second transceiver relative to a reference position of the power receiving coil prior to the specifying of the relative position.

7. The wireless power transfer method according to any one of claims 1 to 5,
wherein the power receiving device acquires information indicating a position of the first transceiver relative to a reference position of the power supply coil prior to the specifying of the relative position.

8. The wireless power transfer method according to any one of claims 1 to 7, further comprising:
detecting a foreign object situating between the mobility and the location based on a signal transmitted from at least one of the first transceiver and the second transceiver; and
executing a least one of notification processing and processing for restricting the wireless power transfer in a case where the foreign object is detected.

9. The wireless power transfer method according to any one of claims 1 to 8,
wherein the second transceiver is commonly used for authentication performed to lock/unlock the mobility.

10. A wireless power transfer system, comprising:
a control device;
a power receiving device adapted to be installed in a mobility; and
a power feeding device adapted to be installed in a location external to the mobility,
wherein the power feeding device includes:
a power supply coil; and
at least one first transceiver configured to perform communication conforming to a UWB wireless communication standard;
wherein the power receiving device includes:
a power receiving coil; and
at least one second transceiver configured to perform the communication conforming to the UWB wireless communication standard with the at least one first transceiver;
wherein the control device is configured to:
specify a relative position of the power supply coil the power receiving coil based on the communication; and
execute processing related to the wireless power transfer based on the relative position.

11. A power feeding device adapted to be installed in a location external to a mobility, comprising:
a power supply coil adapted to perform wireless power transfer using an electromagnetic field with respect to a power receiving coil installed in the mobility;
at least one transceiver adapted to perform communication conforming to a UWB wireless communication standard with at least one transceiver installed in the mobility; and
a support supporting the power supply coil and the at least one transceiver such that a relative position thereof is made constant.

12. A power receiving device adapted to be installed in a mobility, comprising:
a power receiving coil adapted to receive wireless power transfer using an electromagnetic field from a power supply coil installed in a location external to the mobility;
at least one transceiver adapted to perform communication conforming to a UWB wireless communication standard with at least one transceiver installed in a location external to the mobility; and
a support supporting the power receiving coil and the at least one transceiver such that a relative position thereof is made constant.

13. A method for specifying a position of a mobility, comprising:
performing communication conforming to a UWB wireless communication standard between a first transceiver installed in the mobility and a second transceiver installed in a location external to the mobility;
specifying a relative position of the first transceiver and the second transceiver; and
specifying the position of the mobility relative to a reference position based on the relative position.

14. A system for specifying a position of a mobility, comprising:
a first transceiver adapted to be installed in the mobility;
a second transceiver adapted to be installed in a location external to the mobility; and
a control device configured to:
specify a relative position of the first transceiver and the second transceiver based on communication conforming to a UWB wireless communication standard performed between the first transceiver and the second transceiver; and
specify the position of the mobility relative to a reference position based on the relative position.

15. A mobility, comprising:
a first transceiver adapted to perform communication conforming to a UWB wireless communication standard with a second transceiver installed in a location external to the mobility; and
a control device configured to:
specify a relative position of the first transceiver and the second transceiver based on the communication; and
specify the position of the mobility relative to a reference position based on the relative position.
